# EUROPÄISCHE PATENTSCHRIFT

(11) **EP 0 674 166 B1**
(45) Veröffentlichungstag und Bekanntmachung des Hinweises auf die Patenterteilung: **19.01.2000**
(21) Anmeldenummer: 95103805.8
(22) Anmeldetag: 16.03.1995
(51) Int. Cl.: G01M 3/28

(54) **Verfahren und Vorrichtung zum Prüfen von porösen Rohren o. dgl. auf Dichtheit sowie Verfahren dafür**
Procedure and device for the leak testing of porous pipes
Procédé et dispositif d'essai d'étanchéité de tuyaux poreux

(30) Priorität: 21.03.1994 DE 4409646; 22.12.1994 DE 4445883
(43) Veröffentlichungstag der Anmeldung: 27.09.1995
(73) Patentinhaber: Josef Messmann GmbH, 26871 Papenburg (DE)
(72) Erfinder: Moser, Berthold, 26871 Papenburg (DE); Messmann, Josef, 26871 Papenburg (DE)
(74) Vertreter: Strauss, Hans-Jochen, Dipl.-Phys., Dr.

(56) Entgegenhaltungen:
- DE-A- 3 211 452
- US-A- 5 231 868

## Beschreibung

Die Erfindung betrifft ein Verfahren zum Prüfen von Rohren o. dgl. aus Beton, Steinzeug, Guß o. dgl. auf Dichtheit mit Hilfe einer Vakuumprüf-Vorrichtung; Vorrichtung zum Durchführen des Verfahrens, wobei der Prüfling beidseits abgedichtet ist, wobei eine der Abdichtungen mit einem Anschluß an eine Vakuumpumpe versehen ist, und wobei Mittel vorgesehen sind, zum Messen des Unterdruckes.

Die Erfindung geht aus von den bekannten Prüfverfahren für Rohre aus Steinzeug, Ton, Beton oder ähnlichen porösen Werkstoffen, bei denen beide Rohrenden mittels mit Dichtungen versehenen Prüfplatten verschlossen werden, von denen eine einen Anschlußstutzen für ein Unterdruckaggregat aufweist, mit dessen Hilfe im Rohr ein Vakuum erzeugt wird. Die Abnahme des Vakuums oder die unter der Wirkung des Unterdruckes von außen bei Berieselung durchdringenden Wassers entstehenden Feuchstellen im Inneren, erlauben zumindest die Beurteilung des Prüflings auf Dichtheit oder auch deren quantitative Bestimmung. Weiter ist es bekannt, derartige Rohre unter Überdruck zu prüfen und ein Abfallen des Überdruckes über die Zeit zu bestimmen. Die Anwendung dieses Verfahrens führt jedoch zu unsicheren Ergebnissen, da insbesondere in der Takt-Fertigung nicht hinreichend lange zugewartet werden kann, wie es zum Einstellen eines stationären Gleichgewichts notwendig wäre. Das Einstellen des stationären Gleichgewichts wird dabei insbesondere durch die für die adiabatische Entspannung der Luft beim Ziehen des Vakuums verbrauchte Wärmeenergie verzögert. Eine weitere Verzögerung tritt durch das Verdunsten von immer noch in Poren enthaltenem Restwasser ein, die eine Abkühlung des (Rest-) Luftinhaltes im Prüfling bewirken und so eine Absenkung des Druckes, wodurch eine Dichtheit vorgetäuscht werden kann, die nicht gegeben ist.

Hier setzt die Erfindung ein, der die Aufgabe zugrundeliegt, ein gattungsgemäßes Verfahren anzugeben, daß das Einstellen des stationären Gleichgewichts beschleunigt und bei Taktfertigungen eine Verkürzung der Prüfungszeit bewirkt; ferner ist es Aufgabe der Erfindung eine zum Durchführen des Verfahrens geeignete, gattungsgemäße Vorrichtung anzugeben, mit der die Vakuumprüfung auch bei kurzen Taktzeiten sicher und ungestört durchgeführt werden kann.

Nach der Erfindung wird diese Aufgabe hinsichtlich des Verfahrens gelöst durch die in Hauptanspruch 1, und hinsichtlich der Vorrichtung durch die in dem Anspruch 4 angegebenen Merkmale; vorteilhafte Weiterbildungen und bevorzugte Ausführungsformen des Verfahrens beschreiben die Unteransprüche 2 und 3 und vorteilhafte Weiterbildungen und bevorzugte Ausführungsformen der Vorrichtung sind in den Unteransprüchen 5 bis 10 beschrieben.

Wird in dem beidseits abgedichteten Prüfling mittels einer angeschlossenen Vakuumpumpe ein Vakuum gezogen, kann aus den Abfall des Vakuums nach dem Abschalten des Absaugens eine Aussage über die Dichtheit des Prüflings getroffen werden. Diese Aussage wird jedoch dann unsicher, wenn sich der Innendruck im Prüfling nach dem Stoppen des Absaugens durch Temperaturänderungen verändert. Daher kann eine aussagekräftige Messung erst dann durchgeführt werden, wenn ein stationärer Zustand hinsichtlich der Temperatur erreicht ist. Um diesen Zustand schneller herbeizuführen, wird während des Evakuierens die im Prüfling noch vorhandene Restluft mittels eines Ventilators umgewälzt, wobei der Ventilator vorzugsweise elektrisch angetrieben ist. Jeder Ventilator besitzt eine von seiner Bauart bedingten Wirkungsgrad, der angibt, welcher Anteil der zugeführten Energie in mechanische Arbeit zum Fördern der Luft und welcher Anteil als Verlustleistung direkt in Wärme umgesetzt wird, wobei auch die in zum Fördern der Luft aufgebrachte Leistung in einem geschlossenen System letztendlich in Wärme übergeht. Diese Erscheinung kann erklären, warum durch das Umwälzen der Restluft eine Beschleunigung der Einstellung des zur Prüfung notwendigen stationären Gleichgewichts beiträgt. Alternativ wird in dem zu prüfenden Rohr, dem Prüfling, Wärmeenergie freigesetzt, wobei die freigesetzte Wärmemenge zumindest der bei adiabatischer Entspannung der Luft beim Ziehen des Vakuums verbrauchten Wärmemenge entspricht. Hier liegt eine direkte thermische Einflußnahme auf die Einstellung des stationären Gleichgewichtes vor, wobei die Beschleunigung des Einstellens in gleicher Weise erklärt werden kann. Mit dieser in das System eingebrachten Wärme wird der Temperaturabsenkung während des Ziehens des Vakuums entgegengewirkt und es wird von vornherein die Voraussetzung dafür geschaffen, daß sich das stationäre Gleichgewicht mit hinreichender Schnelligkeit einstellt, so daß die Vorlaufzeit für die eigentliche Messung abgekürzt werden kann. Wird durch einen unzulässigen Abfall des Vakuums, bzw. einen zu schnellen Anstieg des Druckes im Prüfling, während der sich an die Vorlaufzeit anschließende Meßzeit Leckage festgestellt, gilt der Prüfling als undicht und wird -ggf. zu einer Nachbehandlung- ausgesondert.

Vorteilhaft insbesondere bei porösen Prüflingen, in deren Poren erhebliche Wassermengen gespeichert sein können, ist, wenn die im Prüfling freigesetzte Wärmemenge auch die Wärmemenge umfaßt, die der Verdampfungswärme des Wassers entspricht, das während des Ziehens des Vakuums und danach verdampft. Restwasser auf der Oberfläche oder in (oberflächen-nahen) Poren des Prüflings wird beim Ziehen des Vakuums und auch noch danach verdampft, wobei erhebliche Wärmemengen als Verdampfungswärme verbraucht werden. Diese so verbrauchte Wärme wird dem Material des Prüflings entzogen, das sich dadurch abkühlt, so daß in dem entstehenden Temperaturgefälle aus der Restluft im Prüfling wiederum Wärmemengen in das Material nachfließen, was zu einer Abkühlung der Restluft führt, so daß eine Volumenverringerung und damit eine Druckabsenkung die Folge sind. Durch diese Abkühlung, die bei dichtem Prüfling mit einem Absenken des Druckes verbunden ist, wird bei undichtem Rohr der durch die Undichtheit einströmende Luft bedingte Druckanstieg zumindest verzögert und damit eine Dichtheit des Prüflings vorgetäuscht, die nicht gegeben sein muß. Dieser Erscheinung wirkt das Zuführen von zusätzlicher Wärme wiederum entgegen, so daß auch bei feuchten Oberflächen oder Materialien die Vakuum-Prüfung ungestört durchgeführt werden kann.

Zur Durchführung der Prüfung, wobei der Prüfling beidseits abgedichtet ist, wobei eine der Abdichtungen mit einem Anschluß an eine Vakuumpumpe versehen ist, und wobei Mittel vorgesehen sind, zum Messen des Unterdruckes, ist es vorteilhaft, wenn im Prüfling ein von außen bedienbarer Ventilator und/oder eine von außen bedienbare Wärmequelle angeordnet ist/sind. Der Ventilator weist vorteilhaft einen elektrischen Antrieb auf, der von außen geschaltet, möglicherweise auch hinsichtlich der Ventilator-Drehzahl gestellt werden kann; mit der Drehzahl des Ventilators kann die von ihm aufgenommene elektrische Leistung auf einen gewünschten Wert gebracht werden, mit der Schaltbarkeit kann der Ventilator auch getaktet werden, so daß die in das System eingebrachte Energie auch unabhängig von der von Antrieb aufgenommenen Leistung durch das Taktverhältnis auf den gewünschten Wert eingestellt werden. Die Wärmequelle weist vorteilhaft eine elektrische Heizung auf, mit der die Wärmequelle geschaltet und auch hinsichtlich der abgegebenen Leistung gestellt werden kann, so daß die dem System zugeführte Energie ebenfalls auf den gewünschten Wert gebracht und ihre Wärmeabgabe begrenzt werden kann. In vorteilhafter Weiterbildung ist die elektrische Wärmequelle mit Mitteln zum Regeln ihrer Temperatur versehen, was die Reglung der von der Wärmequelle abgegebenen Wärmemenge erlaubt.

Zur Verteilung der von der Wärmequelle im Inneren des Prüflings abgegebenen Wärme ist diese vorteilhaft mit einem Gebläse verbunden. Bei groß-volumigen Prüflingen ist es notwendig und vorteilhaft, wenn die von der Wärmequelle in dem Prüfling abgegebene Wärme mit strömungstechnischen Mitteln im Prüfling verteilt wird. Dazu eignen sich Gebläse, die auch mit der Wärmequelle zu einer Einbaueinheit zusammengefügt sein können, etwa in Form eines Heizgebläses. Diese Wärmequelle ist vorteilhaft direkt an mindestens einer der die Abdichtung des Prüflings bewirkenden Endplatte befestigt; eine alternative Anordnung ist dadurch gegeben, daß die Wärmequelle an einem Zwischenring befestigt ist, der zumindest zwischen einem der abzudichtenden Enden des Prüflings und der den Prüfling abdichtenden Endplatte entsprechende Dichtungen befestigt ist. Mit dieser Anordnung kann sowohl die Endplatte als auch ein Zwischenring die Wärmequelle tragen, wobei es sich von selbst versteht, daß auch der Zwischenring mit dem Anschluß für die Vakuumpumpe versehen sein kann.

In einer bevorzugten Ausführungsform ist als Wärmequelle ein Gebläse vorgesehen, das mit einem Heizelelement versehen ist. Mit dem Gebläse kann die von der Wärmequelle durch Abgabe von Wärmemengen aufgeheizte Luft auch bei großvolumigen Prüflingen so verteilt werden, daß sich das stationäre Gleichgewicht rasch einstellt und die von der Prüfzeit liegende Vorlaufzeit kurz gehalten werden kann. Die durch das Gebläse verursachte Luftströmung ist reich an Mischungsturbulenzen und sorgt so für die gewünschte Vermischung mit der im Hohlraum des Prüflings vorhandenen (Rest-)Luft.

In einer anderen Ausführungform ist ein in das Lumen des Prüflings mit Spiel einführbarer Verdrängungskörper vorgesehen, der die Wärmequelle bildet und der zu diesem Zweck mit Heizmitteln zum Konstanthalten der Oberflächentemperatur versehen ist. Durch das Einführen dieses Verdrängungskörpers wird das zu evakuierende Luftvolumen verkleinert, was zum einen die Zeit zum Ziehen des Vakuums verringert. Zum anderen wird auch das unter dem Einfluß der Temperaturabsenkung stehende Volumen der (Rest-)Luft im Prüfling vermindert, was den Temperaturausgleich fördert, da die Oberfläche des Verdrängungskörpers auf einer konstanten Oberflächentemperatur gehalten ist. Der freie Ringspalt im Prüfling kann dabei so gehalten werden, daß er groß gegenüber der freien Weglänge der Gasmoleküle der (Rest-)Luft ist, so daß Wärmeleitung und Wärmeübergang nicht behindert werden (bei einem Vakuum von 99%, entsprechend einem (absoluten) Druck von 0,01 bar liegt diese noch unter 10⁻³m). Schließlich kann bei dieser Ausführungsform auch die Strahlungswärme den Wärmeverlust durch die aus der Oberfläche des Prüflings verdampfenden Wassermenge kompensieren, wobei hier die Oberflächentemperatur auf einer vorgegebenen Höhe gehalten wird.

Vorteilhaft ist als Heizmittel zum Konstanthalten der Oberflächentemperatur eine Füllung mit einem flüssigen Wärmeträger vorgesehen, dem mit einer Heizeinrichtung die zum Konstanthalten der Oberflächentemperatur notwendige Wärmemenge zuführbar ist. Mit dieser Füllung mit einem flüssigen Wärmeträger wird erreicht, daß die von der Heizeinrichtung freigesetzte Wärmemenge in dem gesamten Volumen verteilt wird, wozu Konvektionsströmungen ausreichen. Ist entsprechend einer vorteilhaften Weiterbildung die Heizeinrichtung außerhalb der Wäremquelle angeordnet, erlaubt der flüssige Wärmeträger einen Wärmetransfer über einen Kreislauf, wobei die Kreislaufströmung zur Ausbildung der gewünschten Konvektion im Prüfling beiträgt. Ist nach einer anderen Weiterbildung die Heizeinrichtung innerhalb der Wärmequelle angeordnet, sind vorteilhaft Mittel vorgesehen, die den flüssigen Wärmeträger innerhalb der Wärmequelle umwälzen, so daß auch hier eine Zwangskonvektion erreicht wird.

Zur Überwachung und auch zur Regelung der abgegebenen Wärmemengen ist die Wärmequelle mit mindestens einem Temperaturfühler versehen, mit dem die Temperatur der als Tauscheroberfläche mit der (Rest-) Luft im Prüfling zusammenwirkenden Oberfläche der Wärmequelle abgenommen wird. Gleichzeitig, oder aber alternativ dazu, ist die Wärmequelle mit mindestens einem Temperaturfühler versehen, zur Abnahme der Temperatur des flüssigen Wärmeträgers oder des heizenden Kerns, insbesondere der Temperatur der die Wärme erzeugenden elektrischen Heizwicklung. Mit dieser Überwachung läßt sich die Temperatur so steuern, daß der die Dichtheitsbestimmung beeinträchtigende Wärmeverlust ausgeglichen werden kann, wobei zunächst auf empirisch bestimmte Zusammenhänge zurückgegriffen werden muß. Dazu wirkt der Temperaturfühler vorteilhaft mit einem Regelkreis zusammen, der über die Temperatur die abgegebene Wärmemenge auf gewünschter Größe hält. Eine vorausschauende Regelung wird erreicht, wenn zur Überwachung ein Computer, etwa ein Personal-Computer, eingesetzt wird, der anhand eines thermischen Modells den Wärmebedarf berechnet und die Wärmeabgabe dementsprechend regelt.

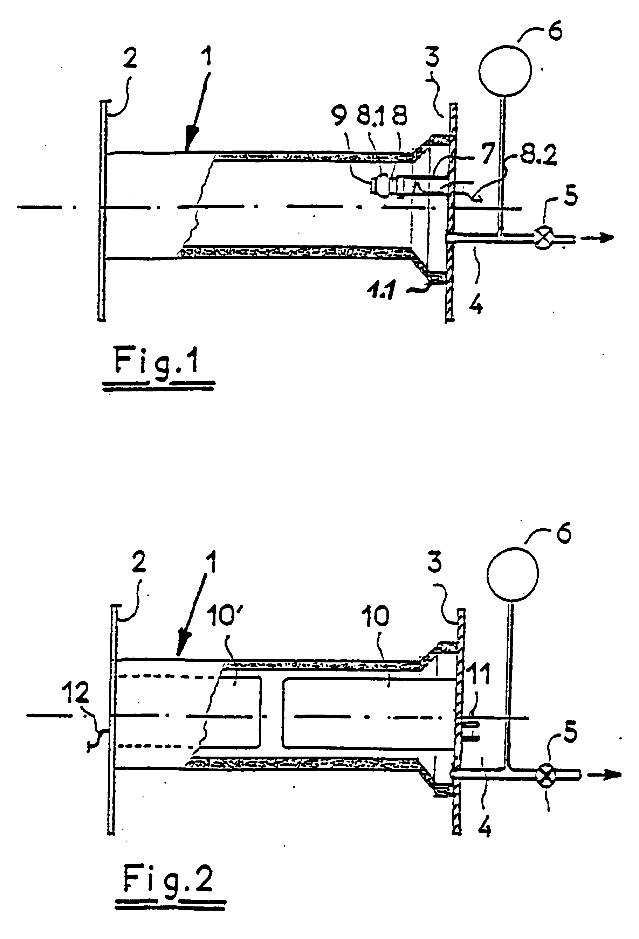

Das Wesen der Erfindung wird an Hand der in den Figuren 1 und 2 dargestellten Ausführungsbeispielen näher erläutert; dabei zeigen
- Fig. 01:: Einen Schnitt durch einen Prüfling mit im Inneren angeordneter Wärmequelle in Form eines Heizgebläses;
- Fig. 02:: Prüfling mit im Inneren angeordnetem Verdrängungskörper mit Wärmequelle mit flüssigem Wärmeträger.

Die Figuren 1 und 2 zeigen den Prüfling 1, ein teilgeschnittenes Betonrohr, das zur Dichtheitsprüfung zwischen den Endplatten 2 und 3 eingespannt ist. Es versteht sich von selbst, daß diese Endplatten 2 und 3 Teile eines (nicht näher dargestellten) Prüfgestells sind, wobei das Prüfgestell auch so eingerichtet sein kann, daß eine taktweise Prüfung der Prüflinge 1 erfolgt, die auf einer Transportvorrichtung aufliegend durch die als Prüfstation im Zuge der Fertigung ausgebildeten Prüfgestells transportiert werden. Über die Anschlußleitung 4 ist die Stirnplatte 3 an eine Saugpumpe anschließbar, die das Innere des Prüflings 1 bis auf den gewünschten oder erforderlichen Prüfdruck evakuiert. Nach Erreichen des gewünschten oder erforderlichen Vakuums wird der Absperrschieber 5 geschlossen, so daß die Verbindung von Prüfling 1 zur Saugpumpe unterbrochen ist. Undichtheiten in der Wandung des Prüflings lassen nun Luft nachströmen, so daß das Vakuum abgebaut wird, mit der Folge, daß der Druck im Inneren des Prüflings steigt. Ein Druckwächter 6 gestattet, diese Druckänderung zu verfolgen, ggf. auch mit Fernübertragung an eine Leitstelle, in der das Ergebnis auch ausdruckbar ist. Diese Drucküberwachung zur Prüfung setzt voraus, daß die Druckänderung im Inneren des Prüflings ausschließlich auf Undichtheiten zurückzuführen ist. Werden Druckänderungen durch Temperaturänderungen vorgetäuscht, bekommt die Dichtheitsprüfung eine Unsicherheit, wobei die Hauptursache für diese Unsicherheit in einer Absenkung der Temperatur im Inneren des Prüflings 1 zu suchen ist, etwa durch die adiabatische Entspannung der Luft beim Ziehen des Vakuums oder durch den Wärmeentzug aufgrund der Verdampfungswärme von aus der Wandung des noch feuchten Betons verdampfenden Wassers. Durch diese Temperaturabsenkung wird eine Druck-Erniedrigung bewirkt, der durch Zuführung von Wärme entgegengewirkt werden kann.

Die Figur 1 zeigt eine einfache Möglichkeit, die Wärmeenergie zuzuführen; dabei ist an der einen Endplatte 3 ein Aufnahmegestell 7 angeordnet, vorzugsweise exzentrisch, das mit einem Heizlüfter 8 versehen ist. Der Heizlüfter 8 enthält ein Gebläse 8.1, das die von einem (nicht näher dargestellten) elektrischen Heizelement angewärmte Luft umwälzt, wobei Gebläse 8.1 und Heizelement über die Anschlußleitung 8.2 elektrisch angeschlossen sind. Die im Inneren des Prüflings befindliche Luft wird von dem Gebläse 8.1 des Heizlüfters 8 angesaugt und als Freistrahl über dessen Düse 9 in das Innere des Prüflings 1 zurückgeführt. In diesen Kreislauf wird die vom Heizelement abgegebene Wärme eingespeist, die die Lufttemperatur trotz adiabatische Entspannung und trotz Wärmeentzug durch verdampfendes Wasser nicht absinken läßt. Es erscheint selbstverständlich, daß zumindest das Heizelement des Heizlüfters 8 geregelt eingesetzt werden kann; dazu wird zweckmäßig die Temperatur der austretenden Luft mittels eines (nicht näher dargestellten) Temperaturfühlers überwacht, so daß ein Absinken zwar verhindert wird, ein meßbarer Temperaturanstieg der Luft im Inneren des Prüflings jedoch unterbleibt.

Die Figur 2 zeigt eine alternative Lösung, bei der zum einem das Volumen des Innenraumes verkleinert wird und zum anderen Wärme durch geheizte Oberflächen eingebracht wird. Hier ist die Entplatte 3 mit einem in das Innere des Prüflings 1 einführbaren Verdrängungskörper 10 versehen, dessen Durchmesser deutlich unter dem Durchmesser des Prüflings liegt. Wegen dieses im wesentlichen koaxial angeordneten Verdrängungskörpers 10 ist hier der Sauganschluß 4 in den Bereich der Steckmuffe 1.1 des Prüflings 1 verlegt, so daß frei abgesaugt werden kann. Der Verdrängungskörper 10 ist mit einer Heizung versehen, durch die seine Oberfläche auf einer solchen Temperatur gehalten werden kann, daß die durch adiabatische Entspannung oder durch Verdampfung von Wasser verbrauchte Wärmeenergie ergänzt werden kann. Dazu ist in dem Verdrängungskörper 10 eine Heizung vorgesehen, die mittels Vorlauf und Rücklauf 11 an eine Wärmeversorgung angeschlossen ist. In der Darstellung der Figur 2 ist auch die andere Endplatte 2 mit einem analogen Verdrängungskörper versehen, dessen Heizung über ein elektrisch betriebenes Heizelement erfolgt, das über die Anschlußleitung 12 an eine elektrische Versorgung angeschlossen ist. Dabei kann -um die Baulänge des Verdrängungskörpers 10 und die Weglänge zum Zurückziehen der Endplatte 3 zu begrenzen, die Länge des Verdrängungskörpers 10 kürzer gehalten werden, als die Länge des Prüflings 1; eine andere Möglichkeit ist dadurch gegeben, daß der Verdrängungskörper 10 auch derartig geteilt ist, daß die eine Endplatte 3 mit dem gegenüber der Länge des Prüflings 1 kürzeren Verdrängungskörper 10 versehen ist, und die andere Prüfplatte 2 mit einem Verdrängungskörper 10', dessen Länge so gehalten ist, daß die Summe der Längen beider Verdrängungskörper 10 und 10' kürzer ist, als die Länge des Prüflings.

## Patentansprüche

1. Verfahren zum Prüfen von Rohren aus Beton, Steinzeug, Guß auf Dichtheit mit Hilfe einer Vakuumprüf-Vorrichtung **gekennzeichnet durch folgende Verfahrensschritte:**
- Der Prüfling wird beidseitig abgedichtet;
- in dem Prüfling wird mittels einer angeschlossenen Vakuumpumpe ein Vakuum erzeugt;
- während des Absaugens wird die in dem Prüfling noch vorhandene Restluft umgewälzt,
- nach Erreichen des Endvakuums und Erreichen eines stationären Gleichgewichts wird über eine vorgegebene Prüfzeit hinweg die Veränderung des Vakuums beobachtet, wobei ein Abfall des Vakuums auf Undichtheit deutet;
- ein als undicht erkanntes Rohr wird ausgesondert.

2. Verfahren zum Prüfen von Rohren aus Beton, Steinzeug, Guß auf Dichtheit mit Hilfe einer Vakuumprüf-Vorrichtung **gekennzeichnet durch folgende Verfahrensschritte:**
- Der Prüfling wird beidseitig abgedichtet;
- in dem Prüfling wird mittels einer angeschlossenen Vakuumpumpe ein Vakuum erzeugt;
- in dem Rohr Wärmeenergie freigesetzt, wobei die freigesetzte Wärmemenge zumindest der bei adiabatischer Entspannung der Luft beim Ziehen des Vakuums verbrauchten Wärmemenge entspricht;
- nach Einstellung eines stationären Gleichgewichtes wird über eine vorgegebene Prüfzeit hinweg die Veränderung des Vakuums beobachtet, wobei ein Abfall des Vakuums auf Undichtheit deutet;
- ein als undicht erkanntes Rohr wird ausgesondert.

3. Verfahren nach Anspruch 1 oder 2, **dadurch gekennzeichnet,** daß die im Prüfling freigesetzte Wärmemenge auch die Wärmemenge umfaßt, die der Verdampfungswärme von im Prüfling noch enthaltenen Rest-Wassers entspricht, das während des Ziehens des Vakuums und danach verdampft.

4. Vorrichtung zum Durchführen des Verfahrens nach einem der Ansprüche 1 bis 3, wobei der Prüfling beidseits abgedichtet ist, wobei eine der Abdichtungen mit einem Anschluß an eine Vakuumpumpe versehen ist, und wobei Mittel vorgesehen sind, zum Messen des Unterdruckes, **dadurch gekennzeichnet,** daß im Prüfling (1) ein vorzugsweise an oder im Bereich einer der den Prüfling (1) abdichtenden Endplatte befestigter Ventilator mit Antrieb angeordnet ist.

5. Vorrichtung zum Durchführen des Verfahrens nach einem der Ansprüche 1 bis 3, wobei der Prüfling beidseits abgedichtet ist, wobei eine der Abdichtungen mit einem Anschluß an eine Vakuumpumpe versehen ist, und wobei Mittel vorgesehen sind, zum Messen des Unterdruckes, **dadurch gekennzeichnet,** daß im Prüfling (1) eine von außen bedienbare, vorzugsweise an oder im Bereich einer der den Prüfling (1) abdichtenden Endplatte befestigte Wärmequelle (8; 10, 10') angeordnet ist.

6. Vorrichtung nach Anspruch 4 oder 5, **dadurch gekennzeichnet,** daß die Wärmequelle (8; 10, 10') mit Mitteln zum Regeln ihrer Temperatur versehen ist.

7. Vorrichtung zum Durchführen des Verfahrens nach einem der Ansprüche 1 bis 3, wobei der Prüfling beidseits abgedichtet ist, wobei eine der Abdichtungen mit einem Anschluß an eine Vakuumpumpe versehen ist, und wobei Mittel vorgesehen sind, zum Messen des Unterdruckes, **dadurch gekennzeichnet,** daß ein in das Lumen des Prüflings (1) mit Spiel einführbarer Verdrängungskörper (10, 10') vorgesehen ist, der die Wärmequelle bildet, wobei vorzugsweise der Verdrängungskörper (10, 10') mit Mitteln zum Konstanthalten seiner Oberflächentemperatur versehen ist.

8. Vorrichtung nach Anspruch 7, **dadurch gekennzeichnet,** daß als Heizmittel für den Verdrängungskörper (10, 10') ein flüssiger Wärmeträger vorgesehen ist, wobei vorzugsweise in dem Verdrängungskörper (10, 10') eine den flüssigen Wärmeträger aufheizende, vorzugsweise elektrisch betriebene Wärmequelle angeordnet ist.

9. Vorrichtung nach Anspruch 7, **dadurch gekennzeichnet,** daß als Heizmittel für den Verdrängungskörper (10, 10') ein flüssiger Wärmeträger vorgesehen ist, wobei vorzugsweise der Verdrängungskörper (10, 10') über einen Vor- und einen Rücklauf (11) mit einer Wärmeversorgung verbunden ist, zum Zuführen der Wärme, vorzugsweise zum Zu- und Abführen des flüssigen Wärmeträgers.

10. Vorichtung nach einem der Ansprüche 7 bis 9, **dadurch gekennzeichnet,** daß Mittel zum Konstanthalten der Oberflächentemperatur des Verdrängungskörpers (10, 10') vorgesehen sind, wobei vorzugsweise die Wärmequelle mit mindestens einem Temperaturfühler versehen ist, zur Abnahme der Temperatur der als Tauscheroberfläche mit der (Rest-)Luft im Prüfling zusammenwirkenden Oberfläche der Wärmequelle.

11. Vorichtung nach einem der Ansprüche 7 bis 9, **dadurch gekennzeichnet,** daß Mittel zum Konstanthalten der Oberflächentemperatur des Verdrängungskörpers (10, 10') vorgesehen sind, wobei vorzugsweise die Wärmequelle mit mindestens einem Temperaturfühler versehen ist, zur Abnahme der Temperatur des Kerns, insbesondere der Temperatur der die Wärme erzeugenden elektrischen Heizwicklung.

12. Vorrichtung nach Anspruch 10 oder 11, **dadurch gekennzeichnet,** daß der Temperaturfühler mit einem Regelkreis zusammenwirkt, der über die Temperatur die abgegebene Wärmemenge auf gewünschter Größe hält.

## Claims

1. Method for testing pipes made of concrete, stoneware, cast metal for tightness with the aid of a vacuum testing device, characterised by the following steps:
- the test specimen is sealed at both ends;
- a vacuum is generated in the test specimen by means of a connected vacuum pump;
- during evacuation, the residual air still present in the test specimen is circulated;
- after reaching the final vacuum and reaching a stationary equilibrium, the change in the vacuum is observed during a predetermined test period, a decrease in the vacuum indicating a leak;
- a pipe that is found to be leaky is rejected.

2. Method for testing pipes made of concrete, stoneware, cast metal for tightness with the aid of a vacuum testing device, characterised by the following steps:
- the test specimen is sealed at both ends;
- a vacuum is generated in the test specimen by means of a connected vacuum pump;
- thermal energy is released in the pipe, with the quantity of heat released being at least equal to the quantity of heat consumed in adiabatic lowering of the air pressure during generation of the vacuum;
- after establishment of a stationary equilibrium, the change in the vacuum is observed during a predetermined test period, a decrease in the vacuum indicating the presence of a leak;
- a pipe that is found to be leaky is rejected.

3. Method as claimed in Claim 1 or 2, characterised in that the quantity of heat released in the test specimen also includes the quantity of heat that is equivalent to the heat of evaporation of the residual water still contained in the test specimen, which evaporates during and after generation of the vacuum.

4. Device for performing the method as claimed in any one of Claims 1 to 3, the test specimen being sealed at both ends, with one of the seals being provided with a connection to a vacuum pump, and with means being provided for measuring the vacuum, characterised in that there is arranged in the test specimen (1) a fan with drive, which is preferably fixed on or in the region of one of the end plates sealing the test specimen (1).

5. Device for performing the method as claimed in any one of Claims 1 to 3, the test specimen being sealed at both ends, with one of the seals being provided with a connection to a vacuum pump, and with means being provided for measuring the vacuum, characterised in that there is arranged in the test specimen (1) an externally controllable heat source (8; 10; 10') which is preferably fixed on or in the region of one of the end plates sealing the test specimen (1).

6. Device as claimed in Claim 4 or 5, characterised in that the heat source (8; 10; 10') is provided with means for regulating its temperature.

7. Device for performing the method as claimed in any one of Claims 1 to 3, the test specimen being sealed at both ends, with one of the seals being provided with a connection to a vacuum pump, and with means being provided for measuring the vacuum, characterised in that there is provided a displacement element (10, 10') which is adapted to be introduced with a clearance into the lumen of the test specimen (1) and which forms the heat source, the displacement element (10, 10') preferably being provided with means of keeping its surface temperature stable.

8. Device as claimed in Claim 7, characterised in that there is provided as the heating means for the displacement element (10, 10') a liquid heat carrier, with a preferably electrically operated heat source which heats the liquid heat carrier being preferably arranged in the displacement element (10, 10').

9. Device as claimed in Claim 7, characterised in that there is provided as the heating means for the displacement element (10, 10') a liquid heat carrier, with the displacement element (10, 10') being preferably connected via a feed line and a return line (11) with a heat supply for supplying the heat, preferably for introducing and withdrawing the liquid heat carrier.

10. Device as claimed in any one of Claims 7 to 9, characterised in that means are provided of keeping the surface temperature of the displacement element (10, 10') stable, with the heat source being preferably connected to at least one temperature sensor for taking the temperature of the surface of the heat source, which co-operates with the (residual) air in the test specimen as an exchanger surface.

11. Device as claimed in any one of Claims 7 to 9, characterised in that means are provided of keeping the surface temperature of the displacement element (10, 10') stable, with the heat source being preferably provided with at least one temperature sensor for taking the temperature of the core, especially the temperature of the electric heating coil which generates the heat.

12. Device as claimed in Claims 10 or 11, characterised in that the temperature sensor co-operates with a control loop which by way of the temperature maintains the quantity of heat emitted at the desired value.

## Revendications

1. Procédé pour contrôler l'étanchéité de tubes en béton, en grès cérame, en fonte, à l'aide d'un dispositif de contrôle sous vide, caractérisé par les étapes opératoires suivantes :
- on ferme d'une manière étanche la pièce à contrôler des deux côtés ;
- dans la pièce à tester, on produit un vide à l'aide d'une pompe à vide raccordée ;
- pendant l'aspiration, on fait circuler l'air résiduel encore présent dans la pièce à contrôler,
- une fois que le vide final est atteint et qu'un équilibre stationnaire est atteint, on observe la modification du vide pendant une durée de contrôle prédéterminée, une diminution du vide indiquant un défaut d'étanchéité ;
- on écarte un tube identifié comme non étanche.

2. Procédé pour contrôler l'étanchéité de tubes en béton, en grès cérame, en fonte, à l'aide d'un dispositif de contrôle sous vide, caractérisé par les étapes opératoires suivantes :
- on ferme d'une manière étanche la pièce à contrôler des deux côtés ;
- dans la pièce à contrôler, on produit un vide à l'aide d'une pompe à vide raccordée ;
- on libère dans le tube une énergie thermique, l'énergie thermique libérée correspondant au moins à la quantité de chaleur consommée lors de la détente adiabatique de l'air lors de l'établissement du vide ;
- après réglage d'un équilibre stationnaire, on observe la variation du vide pendant une durée de contrôle prédéterminée, une diminution du vide indiquant un défaut d'étanchéité ;
- on écarte un tube identifié comme non étanche.

3. Procédé selon la revendication 1 ou 2, caractérisé en ce que la quantité de chaleur libérée dans la pièce à contrôler inclut également la quantité de chaleur qui correspond à la chaleur de vaporisation de l'eau résiduelle encore contenue dans la pièce à contrôler et qui se vaporise pendant l'établissement du vide et ensuite.

4. Dispositif pour la mise en oeuvre du procédé selon l'une des revendications 1 à 3, dans lequel la pièce à contrôler est fermée de façon étanche sur ses deux côtés, l'un des éléments d'étanchéité est pourvu d'un raccord de liaison à une pompe à vide, et des moyens sont prévus pour mesurer la dépression, caractérisé en ce qu'un ventilateur, qui est fixé de préférence sur ou au voisinage d'une plaque d'extrémité fermant de façon étanche la pièce à contrôler (1) et est équipé d'un dispositif d'entraînement, est disposé dans la pièce à tester (1).

5. Dispositif pour la mise en oeuvre du procédé selon l'une des revendications 1 à 3, dans lequel la pièce à contrôler est fermée de façon étanche sur ses deux côtés, l'un des éléments d'étanchéité est pourvu d'un raccord de liaison à une pompe à vide, et des moyens sont prévus pour mesurer la dépression, caractérisé en ce qu'une source de chaleur (8 ; 10, 10'), qui peut être commandée de l'extérieur et est fixée de préférence à ou au voisinage d'une plaque d'extrémité fermant de façon étanche la pièce à contrôler (1), est disposée dans la pièce à contrôler (1).

6. Dispositif selon la revendication 4 ou 5, caractérisé en ce que la source de chaleur (8 ; 10, 10') est pourvue de moyens servant à régler sa température.

7. Dispositif pour la mise en oeuvre du procédé selon l'une des revendications 1 à 3, dans lequel la pièce à contrôler est fermée de façon étanche sur ses deux côtés, l'un des éléments d'étanchéité est pourvu d'un raccord de liaison à une pompe à vide, et des moyens sont prévus pour mesurer la dépression, caractérisé en ce qu'il est prévu un corps de refoulement (10, 10'), qui peut être introduit avec jeu dans la lumière de la pièce à contrôler (1) et qui forme la source de chaleur, le corps de refoulement (10, 10') comportant de préférence des moyens pour maintenir constante sa température superficielle.

8. Dispositif selon la revendication 7, caractérisé en ce qu'il est prévu un liquide caloporteur comme moyens de chauffage pour le corps de refoulement (10, 10'), une source de chaleur, qui chauffe le liquide caloporteur et fonctionne de préférence électriquement, étant disposée de préférence dans le corps de refoulement (10, 10').

9. Dispositif selon la revendication 7, caractérisé en ce qu'il est prévu un liquide caloporteur comme moyens de chauffage pour le corps de refoulement (10, 10'), le corps de refoulement (10, 10') étant relié de préférence par l'intermédiaire d'un trajet aller et retour (11) à une source de chaleur, pour l'envoi de la chaleur, de préférence pour l'amenée et l'évacuation du liquide caloporteur.

10. Dispositif selon l'une des revendications 7 à 9, caractérisé en ce que des moyens sont prévus pour maintenir constante la température superficielle du corps de refoulement (10, 10'), la source de chaleur étant équipée de préférence d'au moins un capteur de température servant à évacuer la température de la surface de la source de chaleur, qui coopère, en tant que surface d'échange, avec l'air (résiduel) situé dans la pièce à contrôler.

11. Dispositif selon l'une des revendications 7 à 9, caractérisé en ce que des moyens sont prévus pour maintenir constante la température superficielle du corps de refoulement (10, 10'), la source de chaleur étant de préférence équipée d'au moins un capteur de température, pour réduire la température du noyau, notamment la température de l'enroulement électrique de chauffage produisant la chaleur.

12. Dispositif selon la revendication 10 ou 11, caractérisé en ce que le capteur de température coopère avec un circuit de régulation, qui maintient la quantité de chaleur délivrée, à la valeur désirée, en fonction de la température.
